# EUROPEAN PATENT SPECIFICATION

(11) **EP 3 015 594 B1**
(45) Date of publication and mention of the grant of the patent: **15.07.2020**
(21) Application number: 15191434.8
(22) Date of filing: 26.10.2015
(51) Int. Cl.: D06F 58/22, D06F 58/24, D06F 58/20

(54) **LAUNDRY TREATING APPARATUS**
WÄSCHEBEHANDLUNGSVORRICHTUNG
APPAREIL DE TRAITEMENT DU LINGE

(30) Priority: 28.10.2014 KR 20140147788
(43) Date of publication of application: 04.05.2016
(73) Proprietor: LG Electronics Inc., Seoul 07336 (KR)
(72) Inventor: KIM, Hyojun, Seoul 08592 (KR); HONG, Sangwook, Seoul 08592 (KR); KIM, Youngsuk, Seoul 08592 (KR)
(74) Representative: Ter Meer Steinmeister & Partner

(56) References cited:
- EP-A1- 1 669 487
- EP-A1- 2 559 805
- EP-A2- 2 202 349
- WO-A1-2011/061068
- WO-A1-2014/115999
- WO-A2-2011/057954
- WO-A2-2013/151345

## Description

### BACKGROUND

### 1. Field

A laundry treating apparatus is disclosed herein.

### 2. Background

A laundry treating apparatus includes an apparatus for washing or drying laundry, and an apparatus for washing and drying laundry. A laundry treating apparatus capable of drying laundry is configured to supply air at a high temperature (hot blast) to laundry, which may be classified into an exhaust type and a circulation type (condensation type) according to an air flow method.

The circulation type laundry treating apparatus includes structure to circulate air inside of a laundry accommodation unit or device in which laundry is placed. With this structure, air discharged from the laundry accommodation device is heated after moisture is removed (dehumidifying) from the air, and then the air is re-supplied to the laundry accommodation device.

The exhaustion type laundry treating apparatus includes structure to supply heated air to a laundry accommodation device. With this structure, air discharged from the laundry accommodation device is discharged outside of the laundry treating apparatus, without being circulated.

A hot air supply unit or device, provided at the conventional laundry treating apparatus, includes a blower configured to discharge air inside of a laundry accommodation unit, and a heat exchange unit or heat exchanger configured to heat air which flows by the blower. The heat exchange unit, a means to exchange heat with air, may have lowered heat exchange efficiency, in a case in which foreign materials are laminated thereon.

WO 2011/061068 A1 discloses a dryer comprising a drying chamber for receiving damp goods and a substantially closed process air guide for circulating process air through the drying chamber, said process air guide comprising a heat source for heating the process air before the entry thereof into the drying chamber, and a heat sink for cooling the process air after the exit thereof from the drying chamber, and a first lint filter disposed between the drying chamber and the heat sink for capturing lint from the process air, wherein the first lint filter is removable.

EP 2 202 349 A2 discloses a dryer having a fluff filter for filtering fluff in a process air channel of the dryer, and a cleaning device for cleaning the filter. The filter is arranged in a compartment inclined at an angle. A cleaning is located in an upper region of the filter for directing a cleaning liquid onto a filter surface of the filter.

EP 2 559 805 A1 discloses a clothes tumble dryer comprising a rotating drum and a closed processing air duct adapted to circulate processing air through the drum. The dryer further comprises a heater or first heat exchanger adapted to heat the processing air before it enters the drum and a second heat exchanger adapted to remove moisture from the processing air after it has passed through the drum. A lint filter is positioned in the duct to remove lint from the process air. The dryer comprises an accumulator tank adapted to collect condense water from the second heat exchanger and a water pump adapted to pump the water from the accumulator tank. The water pump is fluidly connected to a nozzle means via a cleaning circuit, wherein the circuit is adapted to hold a water pressure generated by the pump and guide condense water from the pump to the nozzle means in order to spray condense water onto the lint filter.

WO 2014/115599 A1 discloses a laundry treatment apparatus including a cabinet having a laundry opening, a laundry accommodation module to receive laundry through the laundry opening, a suction duct into which interior air from the laundry accommodation module may be introduced, a discharge duct from which the air is discharged into the laundry accommodation module, a connection duct connecting the suction duct and the discharge duct to each other, a heat exchanger provided in the connection duct, and a blower provided between the heat exchanger and the discharge duct to circulate the interior air of the laundry accommodation module.

EP 1 669 487 A1 discloses a washing machine combined with a dryer. In the washing machine, a cabinet is provided, a tub is installed in the cabinet, an air-vent hose is installed to an outer surface of the tub, a lint filter assembly has one end connected to the air-vent hose to remove lint from air discharged from the tub, and an air-vent duct is connected to the other end of the lint filter assembly.

### SUMMARY OF THE INVENTION

Therefore, an aspect of the detailed description is to provide a laundry treating apparatus capable of simultaneously cleaning a filter unit for filtering air supplied to a heat exchange unit, and the heat exchange unit.

To achieve these and other advantages and in accordance with the purpose of this specification, as embodied and broadly described herein, there is provided a laundry treating apparatus, including the features of claim 1. Accordingly, a laundry treating apparatus according to the present invention includes a laundry accommodation unit configured to provide a space where laundry is accommodated, having an exhaust unit configured to exhaust air, and having a supply unit configured to supply air; a circulation passage configured to guide air exhausted from the exhaust unit to the supply unit, and having an inlet communicated with the exhaust unit; a heat exchange unit disposed in the circulation passage; a filter frame disposed between the heat exchange unit and the inlet; a filter fixed to the filter frame, and disposed on a sectional surface of the circulation passage; and a filter washing unit fixed to the filter frame, and configured to supply washing water to the filter.

According to the present invention, the filter frame includes: a body provided at the circulation passage; and an open surface provided to pass through the body, wherein the filter is fixed to the open surface, and wherein the filter washing unit is fixed to the body.

The filter washing unit includes: a passage body that receives washing water thereinto, and provided above the open surface; and one or more discharge holes that discharge the washing water inside of the passage body to the filter, and formed at the passage body.

Preferably, the filter frame is provided so as to be withdrawn from the circulation passage.

More preferably, a distance from a lower end of the filter to the inlet is shorter than a distance from an upper end of the filter to the inlet.

Even more preferably, the distance from the lower end of the filter to the inlet is longer than the distance from the upper end of the filter to the inlet.

More preferably, the filter is formed to have a convex surface toward a direction which becomes far from the inlet.

More preferably, the inlet is provided on a plane contacting a lower end of the filter, and the filter frame further includes a guider configured to guide air introduced from the inlet toward the filter.

More preferably, the laundry treating apparatus further includes a washing unit configured to spray washing water to the heat exchange unit.

More preferably, the washing unit includes: a passage body disposed in a widthwise direction of the circulation passage, and configured to introduce washing water thereinto; and a second discharge hole configured to discharge the washing water inside the second passage body to the heat exchange unit.

Even more preferably, the heat exchange unit includes: a first heat exchange plate configured to exchange heat with air inside the circulation passage; a first refrigerant pipe fixed to the first heat exchange plate; a second heat exchange plate disposed in the circulation passage, and configured to exchange heat with air which has passed through the first heat exchange plate; a second refrigerant pipe fixed to the first and second heat exchange plates; a compression part configured to supply a refrigerant discharged from the first refrigerant pipe to the second refrigerant pipe, in a compressed manner; and an expansion part configured to move the refrigerant discharged from the second refrigerant pipe, to the first refrigerant pipe, after lowering pressure of the refrigerant.

More preferably, the circulation passage includes: a first mounting unit configured to support the heat exchange unit; and a second mounting unit configured to support a lower end of the filter frame, and disposed at a higher position than the first mounting unit.

More preferably, the circulation passage further includes: a drain unit configured to discharge the water inside the laundry accommodation unit; and a discharge pipe configured to connect the first mounting unit with the drain unit.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the appended claims.

### BRIEF DESCRIPTION OF THE DRAWINGS

Embodiments will be described in detail with reference to the following drawings in which like reference numerals refer to like elements, and wherein:
FIGS. 1 and 2 are cross-sectional and perspective views of a laundry treating apparatus according to an embodiment;
FIG. 3 is a view illustrating a circulation passage provided at a laundry treating apparatus according to an embodiment;
FIGS. 4, 5A and 5B are views illustrating a heat exchanger provided at a laundry treating apparatus according to an embodiment;
FIGS. 6, 7A and 7B are views illustrating a filter device provided at a laundry treating apparatus according to an embodiment; and
FIGS. 8A, 8B, 9A and 9B are views illustrating a filter device provided at a laundry treating apparatus according to another embodiment of the present invention.

### DETAILED DESCRIPTION

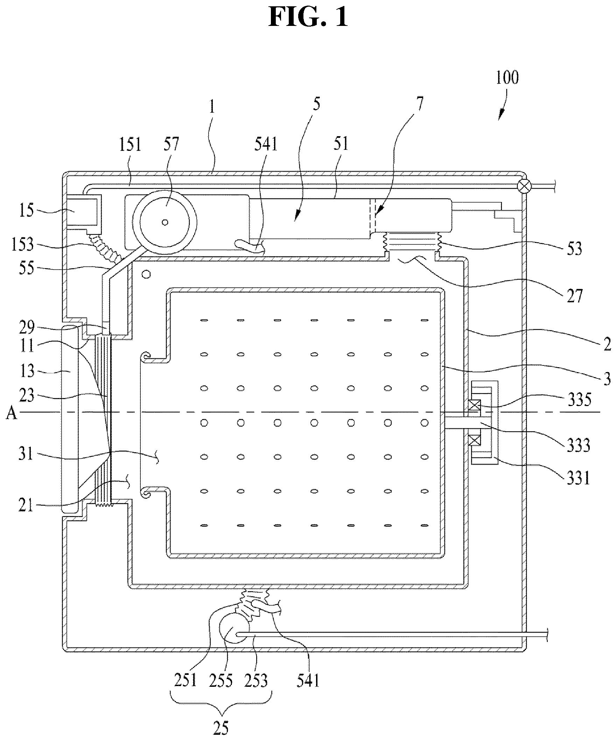

FIG. 1 is a cross-sectional view of a laundry treating apparatus according to an embodiment. As shown in FIG. 1, laundry treating apparatus 100 includes a cabinet 1, which forms an outer appearance thereof, laundry accommodation units or devices 2 and 3 provided in the cabinet 1 to accommodate laundry therein, and a hot blast supply unit or device 5 that supplies a hot blast to the laundry accommodation devices 2 and 3. The cabinet 1 includes an introduction opening 11, into which laundry may be introduced, and a door 13 rotatably provided at the cabinet 1 to open and close the introduction opening 11.

In a case in which the laundry treating apparatus 100 serves as an apparatus for only drying laundry, the laundry accommodation devices may be provided with only a drum 3 rotatably provided in the cabinet 1. On the other hand, if the laundry treating apparatus 100 serves as an apparatus for washing and drying laundry, the laundry accommodation devices may be provided with a tub 2 provided in the cabinet 1 to accommodate washing water therein, and a drum 3 rotatably provided in the cabinet 1 to accommodate laundry therein.

The tub 2 may have a hollow cylindrical shape, and be fixed to an inside of the cabinet 1. A tub introduction opening 21, through which laundry may be introduced, may be provided on or at a front surface of the tub 2 and correspond to the introduction opening 11.

A gasket 23 may be provided between the tub introduction opening 21 and the introduction opening 11. The gasket 23 may prevent washing water stored in the tub 2 from leaking outside of the tub 2, and prevent vibrations from the tub 2 from being transmitted to the cabinet 1 when the drum 3 is rotated. Thus, the gasket 23 may be a vibration isolation member, and may be formed of rubber.

The tub 2 may be installed such that a central longitudinal axis of the tub 2 extends parallel to a ground surface on which the cabinet 1 is supported, or may be installed with a predetermined inclination angle with respect to the ground surface. If the tub 2 is installed with an inclination of a predetermined angle with respect to the ground surface, the predetermined inclination angle may be less than about 90°.

An exhaust unit or device 27, through which air inside the tub 2 is discharged, is provided at an upper portion of a circumferential surface of the tub 2. A drain unit or device 25 that discharges the washing water stored in the tub 2 may be provided at a lower portion of the tub 2.

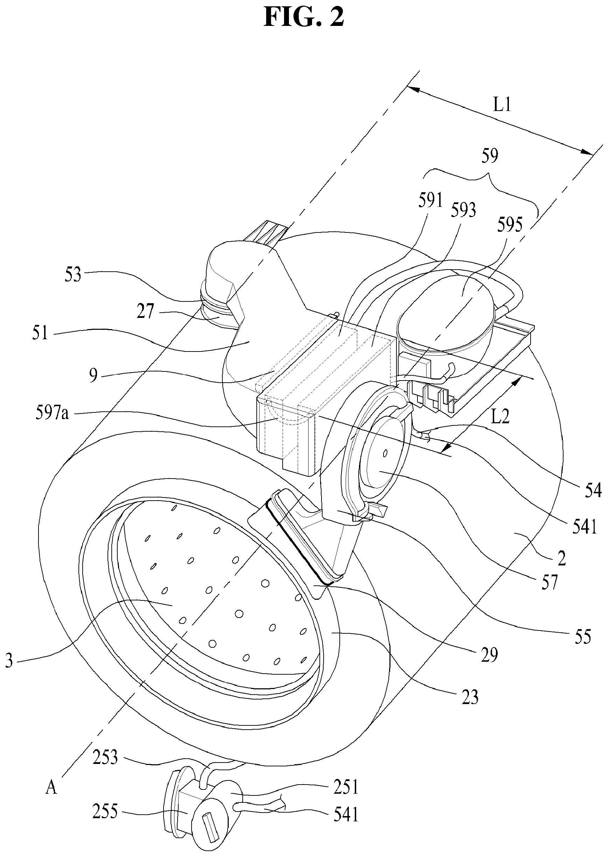

The exhaust device 27 is provided in the tub 2. The exhaust device 27 may be spaced a predetermined distant from a straight line (A) that passes through a center of the tub 2, for example, a predetermined distance (LI) (refer to FIG. 2). The reason is to easily discharge air inside of the tub 2 from the tub 2 through the exhaust device 27 when the drum 3 is rotated.

The drain device 25 may include a drain pump 255, a first drain pipe 251 that connects the drain pump 255 with the tub 2, and a second drain pipe 253 that guides washing water introduced into the drain pump 255 outside of the cabinet 1.

The tub 2 may be supplied with washing water through a water supply pipe 151 that connects the tub 2 with a water supply source. If a detergent supply unit or device 15 that supplies detergent to the tub 2 is provided at the cabinet 1, the water supply pipe 151 may be provided to supply washing water to the detergent supply device 15. In this case, the washing water supplied to the detergent supply device 15 may be supplied to the tub 2 through a detergent supply pipe 153.

The drum 3 may have a hollow cylindrical shape, and may be provided in the tub 2. The drum 3 may be rotatable by a drive provided outside of the tub 2. In this case, the drive may include a stator 335 fixed to a rear surface of the tub 2, a rotor 331 rotated by an electromagnetic operation with the stator 335, and a rotational shaft 333 that connects a rear surface of the drum 3 with the rotor 331 by passing through the rear surface of the tub 2.

A drum introduction opening 31, which may communicate with the introduction opening 11 and the tub introduction opening 21, may be provided on a front side of the drum 3. With such a configuration, a user may put laundry into the drum 3 through the introduction opening 11, or may withdraw laundry stored in the drum 3 outside of the cabinet 1.

As shown in FIG. 2, the hot blast supply device 5 includes circulation passages 51, 53, and 55 that guide air discharged from the inside of the tub 2 to a front side of the tub 2, a blower 57 provided at or in the circulation passages 51, 53, and 55 that circulates air inside of the tub 2, and a heat exchange unit or heat exchanger 59 provided in the circulation passages 51, 53, and 55. The circulation passages 51, 53, and 55 may include a first connection duct 53 connected to a rear side of the tub 2, a duct 51 connected to the first connection duct 53 and having the heat exchanger 59 provided therein or thereon, and a second connection duct 55 that guides air discharged from the duct 51 to a front side of the tub 2.

The first connection duct 53 may be a passage connected to the exhaust device 27 provided on or at a rear side of the circumferential surface of the tub 2, and may be a vibration isolation member, and may be formed of rubber. This may prevent vibrations transmitted to the tub 2 from being transmitted to the heat exchanger 59 provided in the duct 51 through the first connection duct 53 when the drum 3 is rotated.

The first connection duct 53 may include a bellows, in order to effectively prevent transmission of vibrations generated from the tub 2, to the duct 51 and the heat exchanger 59. The second connection duct 55 may be connected to any point on the tub 2, if air discharged from the duct 51 is guided to a front side of the tub 2. FIG. 2 illustrates a case in which the second connection duct 55 supplies air into the tub 2 through the gasket 23. In this case, a supply unit or device 29 that communicates with the second connection duct 55 may be further provided at the gasket 23.

The blower 57 may be provided at the second connection duct 55. The blower 57 may include an impeller (not shown) provided in the second connection duct, and an impeller motor (not shown) that rotates the impeller 571.

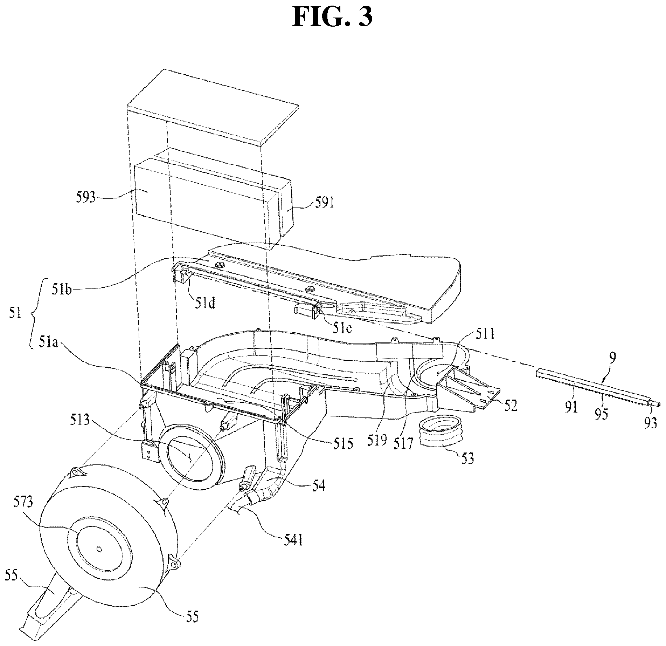

As shown in FIG. 3, an inlet 511 that communicates with the first connection duct 53, and a communication unit or device 513 that communicates with the second connection duct 55 is provided at the duct 51. Thus, the duct 51 serves as a means to guide air supplied into the inlet 511, to the second connection duct 55.

The duct 51 may include a base 51a to support the heat exchanger 59, and a cover 51b fixed to the base 51a. In this case, the inlet 511 and the communication device 513 may be provided at the base 51a.

The heat exchanger 59 may be a heat pump. A first heat exchanger 591 (evaporator) and a second heat exchanger 593 (condenser) provided at the heat exchanger 59 may be fixed to an inside of the duct 51, and a compressor 595 may be provided to supply a refrigerant discharged from the evaporator 591 to the condenser 593 after compressing the refrigerant. The refrigerant supplied to the condenser 593 may be re-supplied to the evaporator 591 via an expansion device 597.

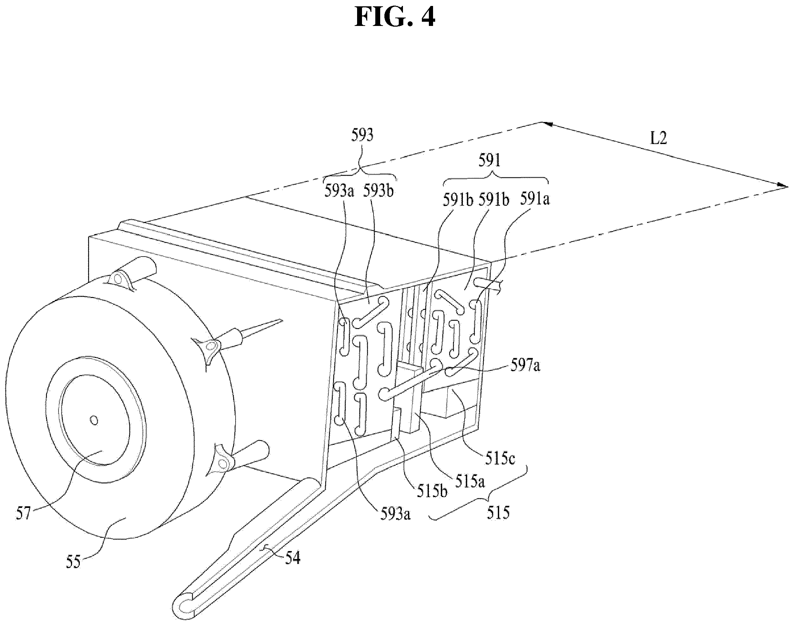

As shown in FIG. 4, the evaporator 591 may include first heat exchange plates 591b, and first refrigerant pipes 591a fixed to the first heat exchange plates 591b. For example, the first heat exchange plates 591b may include a plurality of metallic plates fixed in parallel in a lengthwise direction of the circulation passages (a moving direction of air). In this case, the first heat exchange plates 591b may be spaced from each other by a predetermined distance, in a widthwise direction (L2) of the circulation passages. The first refrigerant pipes 591a, which provide a moving path of a refrigerant, may be fixed to the first heat exchange plates 591b.

The evaporator 591 may evaporate a refrigerant after the refrigerant absorbs heat from air introduced into the duct 51. Thus, the evaporator 591 may serve as a means to remove moisture contained in air by cooling the air.

The duct 51 may further include a condensate water discharge unit or device 54 that discharges moisture removed from air (condensate water) by the evaporator 591 outside of the circulation passages. The condensate water discharge device 54 may be connected to the drain device 25 by a discharge pipe 541.

The condenser 593 may condense a refrigerant. Heat generated while a refrigerant is condensed may be transmitted to air passing through the condenser 593. Thus, the condenser 593 may serve as a means to heat air which has passed through the evaporator 591. The condenser 593 may include second heat exchange plates 593b, and second refrigerant pipes 593a fixed to the second heat exchange plates 593b.

The evaporator 591 and the condenser 593 may be fixed to a first mounting unit or device 515 provided in the duct 51. The first mounting device 515 may include a first supporting portion 515c that supports a lower surface of the evaporator 591, a second supporting portion 515b that supports a lower surface of the condenser 593, and a partition wall 515a provided between the evaporator 591 and the condenser 593. Such a configuration may prevent moisture removed from air passing through the evaporator 591 (condensate water) from moving to the condenser 593, and allow the condensate water to easily flow to the condensate water discharge device 54.

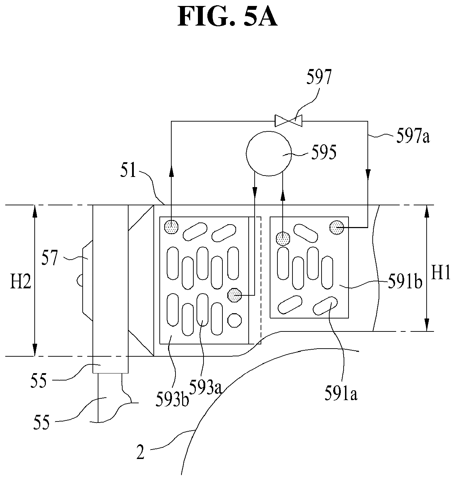

As shown in FIG. 5A, as the circulation passages 51, 53, and 55 may be positioned above the circumferential surface of the tub 2, and a space in which the evaporator 591 is positioned and a space in which the condenser 593 is positioned may have different volumes. If a duct height (HI) of a region in which the evaporator 591 is fixed is different from a duct height (H2) of a region in which the condenser 593 is fixed, a heat exchange amount of the evaporator 591 may be different from a heat exchange amount of the condenser 593. In this case, it may be difficult to solve such a difference between the heat exchange amount of the evaporator 591 and the heat exchange amount of the condenser 593, by merely increasing a volume of the evaporator 591 or the condenser 593, because the volume of the evaporator 591 or the condenser 593 is restricted by a shape of the duct 51.

More specifically, referring to FIG. 5A, it is difficult to increase a length of the second heat exchange plate 593b without changing a shape of the duct 51. The reason is because the second heat exchange plate 593b may interfere with the duct 51 even when a length of the second heat exchange plate 593b is increased toward the evaporator 591, for an increased volume of the condenser 593.

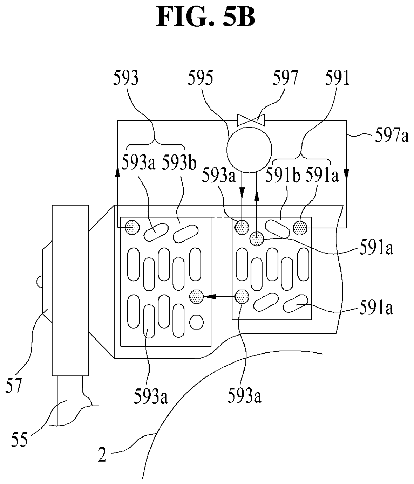

In order to solve such a problem, the condenser 593 may be formed such that a portion of its refrigerant pipes is fixed to the first heat exchange plates 591b of the evaporator 591. As shown in FIG. 5B, the evaporator 591 may include the first heat exchange plates 591b and the first refrigerant pipes 591a fixed to the first heat exchange plates 591b. The condenser 593 may include the second heat exchange plates 593b that exchange heat with air having passed through the first heat exchange plates 591b, and the second refrigerant pipes 593a fixed to the second heat exchange plates 593b. In this case, a portion of the second refrigerant pipes 593a maybe fixed to the first heat exchange plates 591b of the evaporator 591.

More specifically, a refrigerant, which has passed through the first heat exchange plates 591b via the first refrigerant pipes 591a, may be introduced into the second refrigerant pipe 593a via the compressor 595. The second refrigerant pipe 593a may pass through the first heat exchange plates 591b and the second heat exchange plates 593b, sequentially. With such a structure, a length of the second refrigerant pipes 593a may be increased, and thus, a heat exchange amount of the evaporator 591 may become equal to a heat exchange amount of the condenser 593. Further, the refrigerant, discharged from the second heat exchange plates 593b through the second refrigerant pipes 593a, may be re-supplied to the first refrigerant pipes 591a via a connection pipe 597a and the expansion device 597.

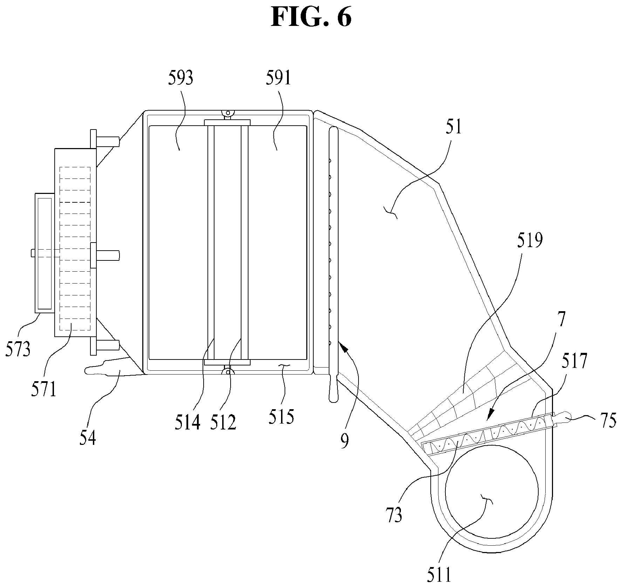

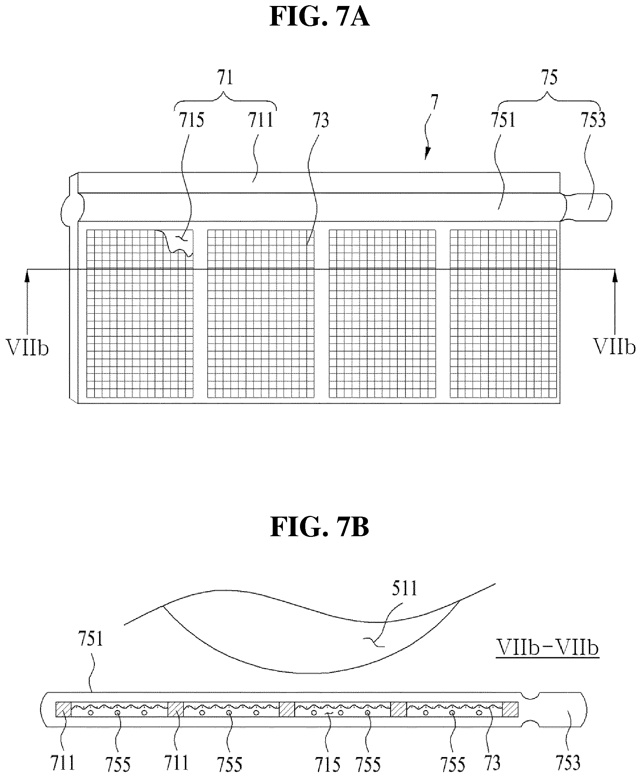

As shown in FIG. 6, the laundry treating apparatus 100 further includes a filter unit or device 7 that prevents lamination of foreign materials on the heat exchanger 59, by filtering air introduced into the circulation passages 51, 53, and 55 after being discharged from the tub 2. As shown in FIGS. 7A and 7B, the filter device 7 includes a filter frame 71 provided between the heat exchanger 59 and the inlet 511, a filter 73 fixed to the filter frame 71 to filter foreign materials and positioned on a sectional surface of the circulation passages, and a filter washer 75 fixed to the filter frame 71 to spray washing water to the filter 73.

The filter frame 71 includes a body 711 provided on a sectional surface of the duct 51, which may be perpendicular to an air flow direction, and an open surface 715 provided to pass through the body 711. In this case, the filter 73 is fixed to the body 711, thereby being positioned at the open surface 715.

The filter washer 75 includes a passage body 751 fixed to the body 711 to introduce washing water thereinto, and one or more discharge hole 755 to discharge the washing water inside of the passage body 751 into the filter 73. The passage body 751 is fixed to an upper portion of the open surface 715. The passage body 751 is supplied with washing water from a water source, through a connection body 753 exposed to an outside of the duct 51 by passing through the duct 51.

The discharge hole(s) 755 spray washing water, such that foreign materials remaining on the filter 73 may be moved toward the inlet 511, to introduce foreign materials separated from the filter 73 into the tub 2 via the inlet 511, the first connection duct 53 and the exhaust device 27, and then to discharge the foreign materials outside of the cabinet 1 when the drain device 25 is operated.

The filter device 7 may be detachably mounted to the circulation passages 51, 53, and 55. That is, the filter frame 71 may be provided so as to be withdrawn from the duct 51. For this, the duct 51 may further include an insertion hole (not shown) into which the filter frame 71 may be inserted.

As shown in FIG. 6, the duct 51 may further include a second mounting unit or device 517 to support the filter frame 71. In this case, the second mounting device 517 may be provided at a higher position than the first mounting device 515, in order to prevent condensate water generated by the heat exchanger 59 from being introduced into the inlet 511. The duct 51 may further include an inclined unit or device 519 downward-inclined from the second mounting device 517 towardly the first mounting device 515, to rapidly discharge washing water discharged from the discharge hole(s) 755, outside of the duct 51 through the condensate water discharge device 54, in a case in which a portion of the washing water discharged from the discharge hole(s) 755 is to be supplied to the heat exchanger 59.

The filter 73 may have a flat surface inclined from a sectional surface of the duct 51 by a predetermined angle, or may be formed to have a curved surface that protrudes in a direction that extends away from the inlet 511. Alternatively, the filter 73 may be formed to have a curved surface inclined from a sectional surface of the duct 51 by a predetermined angle. Such structures are implemented for maximization of a filtering capacity of the filter 73.

In a case in which the filter 73 has a flat surface inclined from a sectional surface of the duct 51 by a predetermined angle, a distance from a lower end of the filter 73 to the inlet 511 may be shorter or longer than a distance from an upper end of the filter 73 to the inlet 511. Considering that foreign materials may be moved to the inlet 511 by washing water sprayed from the discharge hole(s) 755, the distance from the lower end of the filter 73 to the inlet 511 may be shorter than the distance from the upper end of the filter 73 to the inlet 511.

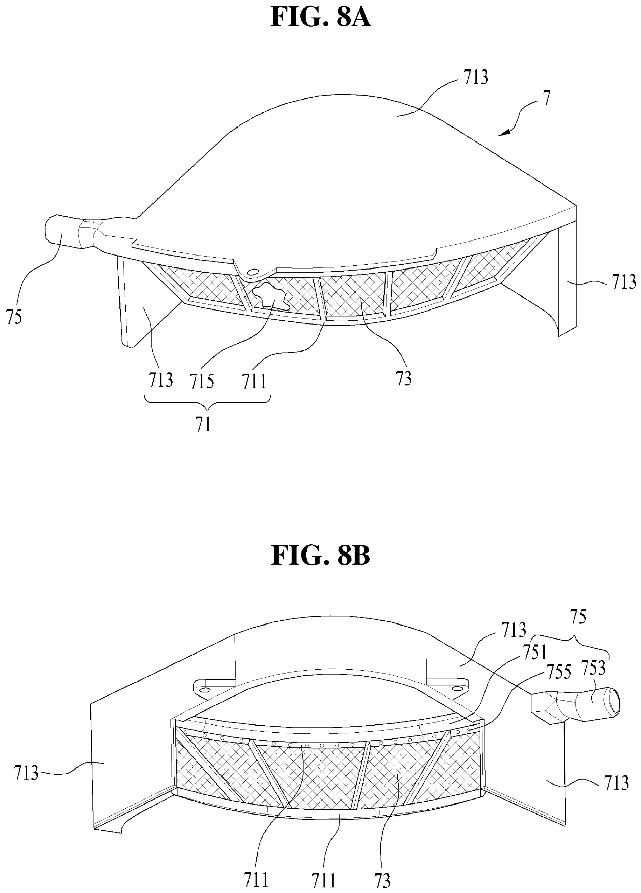

FIGS. 8A and 8B illustrate an example of the filter device 7 including the filter 73 having a curved surface inclined from a sectional surface of the duct 51 by a predetermined angle. In this embodiment, the filter device 7 may also include the filter frame 71 provided between the heat exchanger 59 and the inlet 511, the filter 73 fixed to the filter frame 71 to filter air and positioned on a sectional surface of the circulation passages (a sectional surface perpendicular to an air moving direction), and the filter washer 75 fixed to the filter frame 71 to spray washing water to the filter 73.

The filter frame 71 may include body 711 formed to be convex in a direction that extends away from the inlet 511, open surface 715 formed to pass through the body 711, and guider 713 that guides air introduced into the inlet 511 toward the open surface 715. As the filter 73 may be fixed to the open surface 715, the guider 713 may serve as a means to guide air introduced into the inlet 511 to the filter 73.

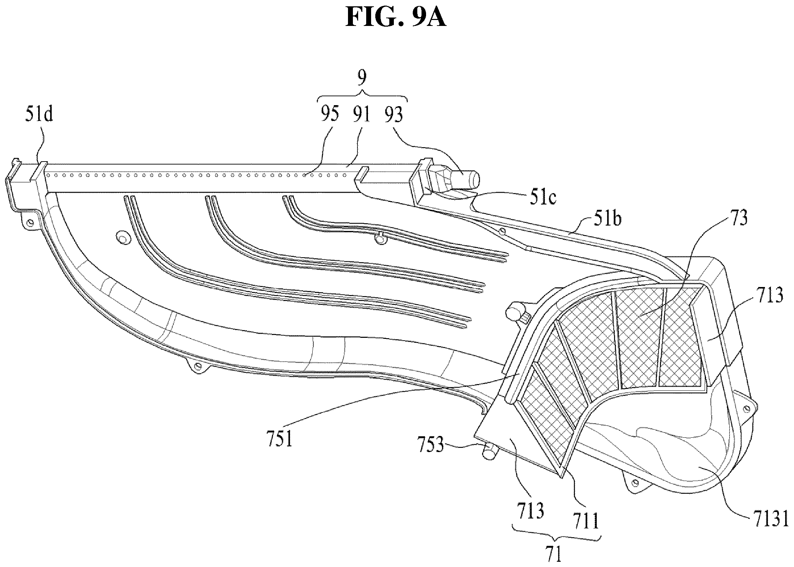

As shown in FIG. 9A, the guider 713 may be further provided with an inclined surface 7131 in order to minimize lowering of a flow speed of air which moves from the inlet 511 to the filter 73. In this embodiment, the filter 73 may be formed to be convex toward the heat exchanger 59. Accordingly, the passage body 751 of the filter washer 75, positioned on an upper end of the filter 73, may also be formed to have a curved surface convex toward the heat exchanger 59.

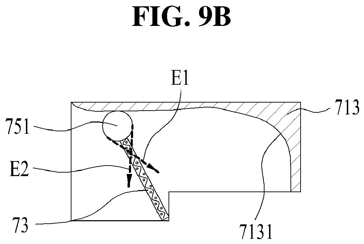

Referring to FIG. 9B, the discharge hole(s) 755 provided at the filter washer 75 may spray washing water toward the filter 73, from a rear side of the filter 73 (a direction toward the heat exchanger 59) (E1), or may spray washing water toward the filter 73, from a front upper side of the filter 73 (a direction toward the inlet) (E2).

As discussed above, the inclined device 519 (refer to FIG. 3) may be provided between the second mounting device 517 to support a lower end of the filter 73, and the first mounting device 515 to support the heat exchanger 59. Accordingly, in the latter case (E2), washing water may be discharged outside of the duct 51, through the condensate water discharge device 54. In the former case (E1), washing water sprayed from the discharge hole(s) 755 may be discharged outside of the circulation passages through the inlet 511.

In the laundry treating apparatus 100 having the aforementioned structure, foreign materials may be laminated on or attached to the heat exchanger 59. This may lower heat exchange efficiency. In order to solve such a problem, the laundry treating apparatus according to embodiments may further include washer 9 to spray washing water onto the heat exchanger 59.

As shown in FIG. 6 or 9A, the washer 9 may include a second passage body 91 provided in a widthwise direction of the circulation passages 51, 53, and 55 to introduce washing water thereinto, and one or more second discharge hole 95 to discharge the washing water inside of the second passage body 91 to the heat exchanger 59. The second passage body 91 may be detachably mounted to the circulation passages 51, 53, and 55. For this, the duct 51 may further include a first coupling unit or device 51c and a second coupling unit or device 51d each to support the second passage body 91. The first coupling device 51c may be a hole that passes through the cover 51b of the duct 51. The second coupling device 51d may be a groove provided at the cover 51b. The groove may support one end of the second passage body 91, which has been inserted into the first coupling device 51c. The second passage body 91 may be connected to a water source through a second connection body 93 formed to pass through the duct 51.

Embodiments disclosed herein provide a laundry treating apparatus capable of simultaneously cleaning a filter device that filters air supplied to a heat exchanger, and the heat exchanger.

Embodiments disclosed herein provide a laundry treating apparatus that includes a laundry accommodation unit or device configured to provide a space in which laundry is accommodated, having an exhaust unit or device configured to exhaust air, and having a supply unit or device configured to supply air; a circulation passage configured to guide air exhausted from the exhaust unit to the supply unit, and having an inlet that communicates with the exhaust unit; a heat exchange unit or heat exchanger disposed or provided in the circulation passage; a filter frame disposed or provided between the heat exchange unit and the inlet; a filter fixed to the filter frame, and disposed or provided on a sectional surface of the circulation passage; and a filter washing unit or washer fixed to the filter frame, and configured to supply washing water to the filter. The filter frame includes a body provided at the circulation passage, and an open surface provided to pass through the body. The filter may be fixed to the open surface, and the filter washing unit is fixed to the body.

The filter washing unit may include a passage body configured to introduce washing water thereinto, and disposed or provided above the open surface, and a discharge hole configured to discharge the washing water inside of the passage body into the filter. The discharge hole may be configured to spray washing water, such that foreign materials remaining on the filter may be moved toward the inlet.

The filter frame may be provided so as to be withdrawn from the circulation passage. A distance from a lower end of the filter to the inlet may be shorter than a distance from an upper end of the filter to the inlet. The distance from the lower end of the filter to the inlet may be longer than the distance from the upper end of the filter to the inlet. The filter may be formed to have a convex surface toward a direction which becomes far from the inlet.

The inlet may be provided on a plane that contacts a lower end of the filter. The filter frame may further include a guider configured to guide air introduced from the inlet toward the filter.

The laundry treating apparatus may further include a washing unit or washer configured to spray washing water to the heat exchange unit. The washing unit may include a second passage body disposed or provided in a widthwise direction of the circulation passage, and configured to introduce washing water thereinto, and a second discharge hole configured to discharge the washing water inside of the second passage body to the heat exchange unit.

The heat exchange unit may include a first heat exchange plate configured to exchange heat with air inside of the circulation passage; a first refrigerant pipe fixed to the first heat exchange plate; a second heat exchange plate disposed or provided in the circulation passage, and configured to exchange heat with air which has passed through the first heat exchange plate; a second refrigerant pipe fixed to the first and second heat exchange plates; a compression part or compressor configured to supply a refrigerant discharged from the first refrigerant pipe to the second refrigerant pipe, in a compressed manner; and an expansion part or device configured to move the refrigerant discharged from the second refrigerant pipe, to the first refrigerant pipe, after lowering a pressure of the refrigerant. The circulation passage may include a first mounting unit or device configured to support the heat exchange unit, and a second mounting unit or device configured to support a lower end of the filter frame, and disposed or provided at a higher position than the first mounting unit.

The circulation passage may further include a drain unit or device configured to discharge the water inside of the laundry accommodation unit, and a discharge pipe configured to connect the first mounting unit with the drain unit.

Embodiments disclosed herein provide a laundry treating apparatus having a filter device to filter air supplied to a heat exchange unit, and capable of cleaning the filter device.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure.

## Claims

1. A laundry treating apparatus (100), comprising:
a laundry accommodation device (2, 3) that provides a space in which laundry is accommodated, the laundry accommodation device (2, 3) having an exhaust device (27) that exhausts air and a supply device (29) that supplies air;
a circulation passage (51, 53, 55) that guides air exhausted from the exhaust device (27) to the supply device (29), the circulation passage (51, 53, 55) having an inlet (511) that accommodates the exhaust device (27);
a heat exchanger (59) provided in the circulation passage (51);
a filter frame (71) provided between the heat exchanger (59) and the inlet (511);
a filter (73) fixed to the filter frame (71) and provided in the circulation passage (51); and
a filter washer (75) fixed to the filter frame (73), that supplies washing water to the filter (73),
wherein the filter frame (71) comprises:
a body (711) provided in the circulation passage (51); and
an open surface (715) provided to pass through the body (711), wherein the filter (73) is fixed to the open surface (715), and
**characterized in that** the filter washer (75) is fixed to the body (711) and comprises:
a passage body (751) that receives washing water thereinto, and provided above the open surface (715);
one or more discharge holes (755) that discharge the washing water inside of the passage body (751) to the filter (73), and formed at the passage body (751); and
a connection body (753) exposed to an outside of the circulation passage (51) by passing through the circulation passage (51) and connected to a water source so as to supply the washing water to the passage body (751).

2. The laundry treating apparatus of claim 1, wherein the one or more discharge holes (755) spray washing water toward the inlet (511).

3. The laundry treating apparatus of any one of claims 1 or 2, wherein the filter frame (71) is removably provided in the circulation passage (51).

4. The laundry treating apparatus of any one of claims 1 to 3, wherein a distance from a lower end of the filter (73) to the inlet (511) is shorter than a distance from an upper end of the filter (73) to the inlet (511).

5. The laundry treating apparatus of any one of claims 1 to 3, wherein a distance from a lower end of the filter (73) to the inlet (511) is longer than a distance from an upper end of the filter (73) to the inlet (511).

6. The laundry treating apparatus of any one of claims 1 to 3, wherein the filter (73) is formed to have a convex surface in a direction that extends away from the inlet (511).

7. The laundry treating apparatus of claim 6, wherein the inlet (511) is provided on a plane in contact with a lower end of the filter (73), and
wherein the filter frame (71) further includes a guider (713) that guides air introduced from the inlet (511) toward the filter (73).

8. The laundry treating apparatus of any one of claims 1 to 7, further including a heat exchanger washer (9) configured to spray washing water onto the heat exchanger (59).

9. The laundry treating apparatus of claim 8, wherein the heat exchanger washer (9) includes:
a passage body (91) provided in a widthwise direction of the circulation passage (51), that receives washing water thereinto; and
one or more discharge holes (95) that discharge the washing water inside of the passage body (91) to the heat exchanger (59).

10. The laundry treating apparatus of any one of claims 1 to 9, wherein the heat exchanger (59) includes:
at least one first heat exchange plate (591b) that exchanges heat with air inside of the circulation passage (51);
at least one first refrigerant pipe (591a) fixed to the at least one first heat exchange plate (591b);
at least one second heat exchange plate (593b) provided in the circulation passage (51), that exchanges heat with air which has passed through the at least one first heat exchange plate (591 b);
at least one second refrigerant pipe (593a) fixed to the at least one first heat exchange plate (591 b) and to the at least one second heat exchange plate (593b);
a compressor (595) that supplies a refrigerant discharged from the at least one first refrigerant pipe (591 a) to the at least one second refrigerant pipe (593a), in a compressed manner; and
an expansion device (597) that moves the refrigerant discharged from the at least one second refrigerant pipe (593a), to the at least one first refrigerant pipe (591 a), after lowering a pressure of the refrigerant.

11. The laundry treating apparatus of claim 10, wherein the circulation passage (51) includes:
a first mounting device (515) that supports the heat exchanger (59); and
a second mounting device (517) that supports a lower end of the filter frame (71), wherein the second mounting device (517) is provided at a higher position than a position of the first mounting device (515).

12. The laundry treating apparatus of claim 11, wherein the circulation passage (51, 53, 55) further includes:
a drain device (25) that discharges the water inside of the laundry accommodation device (2, 3); and
a discharge pipe (541) that connects the first mounting device (515) with the drain device (25).

## Patentansprüche

1. Wäschebehandlungsvorrichtung (100), die Folgendes umfasst:
eine Wäscheaufnahmevorrichtung (2, 3), die einen Raum bereitstellt, in dem Wäsche aufgenommen wird, wobei die Wäscheaufnahmevorrichtung (2, 3) eine Abführvorrichtung (27), die Luft abführt, und eine Zuführvorrichtung (29), die Luft zuführt, aufweist;
einen Zirkulationsdurchlass (51, 53, 55), der Luft, die von der Abführvorrichtung (27) abgeführt wird, zu der Zuführvorrichtung (29) leitet, wobei der Zirkulationsdurchlass (51, 53, 55) einen Einlass (511) aufweist, der die Abführvorrichtung (27) aufnimmt;
einen Wärmetauscher (59), der in dem Zirkulationsdurchlass (51) vorgesehen ist;
einen Filterrahmen (71), der zwischen dem Wärmetauscher (59) und dem Einlass (511) vorgesehen ist;
einen Filter (73), der an dem Filterrahmen (71) fixiert ist und in dem Zirkulationsdurchlass (51) vorgesehen ist; und
ein Filter-Waschelement (75), das an dem Filterrahmen (73) fixiert ist, das dem Filter (73) Waschwasser zuführt,
wobei der Filterrahmen (71) Folgendes umfasst:
einen Körper (711), der in dem Zirkulationsdurchlass (51) vorgesehen ist; und
eine offene Oberfläche (715), die so vorgesehen ist, dass sie durch den Körper (711) verläuft, wobei der Filter (73) an der offenen Oberfläche (715) fixiert ist,
**dadurch gekennzeichnet, dass** das Filter-Waschelement (75) an dem Körper (711) fixiert ist und Folgendes umfasst:
einen Durchlasskörper (751), der Waschwasser aufnimmt und der oberhalb der offenen Oberfläche (715) vorgesehen ist;
ein oder mehrere Abführlöcher (755), die das Waschwasser in dem Durchlasskörper (751) zu dem Filter (73) abführen, und die bei dem Durchlasskörper (751) ausgebildet sind; und
einen Verbindungskörper (753), der zu einer Außenseite des Zirkulationsdurchlasses (51) freiliegt, indem er durch den Zirkulationsdurchlass (51) verläuft, und der mit einer Wasserquelle verbunden ist, um dem Durchlasskörper (751) das Waschwasser zuzuführen.

2. Wäschebehandlungsvorrichtung nach Anspruch 1, wobei das eine oder die mehreren Abführlöcher (755) Waschwasser in Richtung des Einlasses (511) sprühen.

3. Wäschebehandlungsvorrichtung nach einem der Ansprüche 1 oder 2, wobei der Filterrahmen (71) in dem Zirkulationsdurchlass (51) abnehmbar vorgesehen ist.

4. Wäschebehandlungsvorrichtung nach einem der Ansprüche 1 bis 3, wobei ein Abstand von einem unteren Ende des Filters (73) zu dem Einlass (511) kürzer als ein Abstand von einem oberen Ende des Filters (73) zu dem Einlass (511) ist.

5. Wäschebehandlungsvorrichtung nach einem der Ansprüche 1 bis 3, wobei ein Abstand von einem unteren Ende des Filters (73) zu dem Einlass (511) länger als ein Abstand von einem oberen Ende des Filters (73) zu dem Einlass (511) ist.

6. Wäschebehandlungsvorrichtung nach einem der Ansprüche 1 bis 3, wobei der Filter (73) so ausgebildet ist, dass er eine konvexe Oberfläche in einer Richtung aufweist, die sich von dem Einlass (511) weg erstreckt.

7. Wäschebehandlungsvorrichtung nach Anspruch 6, wobei der Einlass (511) auf einer Ebene in Kontakt mit einem unteren Ende des Filters (73) vorgesehen ist, und
wobei der Filterrahmen (71) ferner ein Führungselement (713) umfasst, das Luft, die von dem Einlass (511) eingeleitet wird, in Richtung des Filters (73) leitet.

8. Wäschebehandlungsvorrichtung nach einem der Ansprüche 1 bis 7, die ferner ein Wärmetauscher-Waschelement (9) umfasst, das konfiguriert ist, Waschwasser auf den Wärmetauscher (59) zu sprühen.

9. Wäschebehandlungsvorrichtung nach Anspruch 8, wobei das Wärmetauscher-Waschelement (9) Folgendes umfasst:
einen Durchlasskörper (91), der in einer Breitenrichtung des Zirkulationsdurchlasses (51) vorgesehen ist, der Waschwasser aufnimmt; und
ein oder mehrere Abführlöcher (95), die das Waschwasser in dem Durchlasskörper (91) zu dem Wärmetauscher (59) abführen.

10. Wäschebehandlungsvorrichtung nach einem der Ansprüche 1 bis 9, wobei der Wärmetauscher (59) Folgendes umfasst:
wenigstens eine erste Wärmetauscherplatte (591b), die mit Luft im Inneren des Zirkulationsdurchlasses (51) Wärme austauscht;
wenigstens ein erstes Kühlmittelrohr (591a), das an der wenigstens einen ersten Wärmetauscherplatte (591b) fixiert ist;
wenigstens eine zweite Wärmetauscherplatte (593b), die in dem Zirkulationsdurchlass (51) vorgesehen ist, die mit Luft, die durch die wenigstens eine erste Wärmetauscherplatte (591b) gelangt ist, Wärme austauscht;
wenigstens ein zweites Kühlmittelrohr (593a), das an der wenigstens einen ersten Wärmetauscherplatte (591b) und an der wenigstens einen zweiten Wärmetauscherplatte (593b) fixiert ist;
einen Kompressor (595), der ein Kühlmittel, das von dem wenigstens einen ersten Kühlmittelrohr (591a) abgeführt wird, dem wenigstens einen zweiten Kühlmittelrohr (593a) komprimiert zuführt; und
eine Expansionsvorrichtung (597), die das Kühlmittel, das von dem wenigstens einen zweiten Kühlmittelrohr (593a) abgeführt wird, nachdem der Druck des Kühlmittels reduziert wurde, dem wenigstens einen ersten Kühlmittelrohr (591a) zuführt.

11. Wäschebehandlungsvorrichtung nach Anspruch 10, wobei der Zirkulationsdurchlass (51) Folgendes umfasst:
eine erste Montagevorrichtung (515), die den Wärmetauscher (59) hält; und
eine zweite Montagevorrichtung (517), die ein unteres Ende des Filterrahmens (71) hält, wobei die zweite Montagevorrichtung (517) an einer höheren Position als eine Position der ersten Montagevorrichtung (515) vorgesehen ist.

12. Wäschebehandlungsvorrichtung nach Anspruch 11, wobei der Zirkulationsdurchlass (51, 53, 55) ferner Folgendes umfasst:
eine Ablaufvorrichtung (25), die das Wasser im Inneren der Wäscheaufbewahrungsvorrichtung (2, 3) abführt; und
ein Ablaufrohr (541), das die erste Montagevorrichtung (515) mit der Ablaufvorrichtung (25) verbindet.

## Revendications

1. Appareil de traitement de linge (100), comportant :
un dispositif de réception de linge (2, 3) qui fournit un espace dans lequel du linge est reçu, le dispositif de réception de linge (2, 3) ayant un dispositif d'évacuation (27) qui évacue de l'air et un dispositif d'alimentation (29) qui fournit de l'air ;
un passage de circulation (51, 53, 55) qui guide l'air évacué à partir du dispositif d'évacuation (27) jusqu'au dispositif d'alimentation (29), le passage de circulation (51, 53, 55) ayant une entrée (511) qui reçoit le dispositif d'évacuation (27) ;
un échangeur de chaleur (59) agencé dans le passage de circulation (51) ;
un châssis de filtre (71) agencé entre l'échangeur de chaleur (59) et l'entrée (511) ;
un filtre (73) fixé au châssis de filtre (71) et agencé dans le passage de circulation (51) ; et
un laveur de filtre (75) fixé au châssis de filtre (73), qui fournit de l'eau de lavage au filtre (73),
dans lequel le châssis de filtre (71) comporte :
un corps (711) agencé dans le passage de circulation (51) ; et
une surface ouverte (715) prévue pour passer à travers le corps (711), dans lequel le filtre (73) est fixé à la surface ouverte (715), et
**caractérisé en ce que** le laveur de filtre (75) est fixé au corps (711) et comporte :
un corps de passage (751) qui reçoit de l'eau de lavage dans celui-ci, et agencé au-dessus de la surface ouverte (715) ;
un ou plusieurs trous d'évacuation (755) qui évacuent l'eau de lavage à l'intérieur du corps de passage (751) jusqu'au filtre (73), et formés sur le corps de passage (751) ; et
un corps de liaison (753) exposé à un extérieur du passage de circulation (51) en passant à travers le passage de circulation (51) et relié à une source d'eau de manière à fournir l'eau de lavage au corps de passage (751).

2. Appareil de traitement de linge selon la revendication 1, dans lequel le ou les trous d'évacuation (755) pulvérisent de l'eau de lavage vers l'entrée (511).

3. Appareil de traitement de linge selon l'une quelconque des revendications 1 ou 2, dans lequel le châssis de filtre (71) est agencé de manière amovible dans le passage de circulation (51).

4. Appareil de traitement de linge selon l'une quelconque des revendications 1 à 3, dans lequel une distance depuis une extrémité inférieure du filtre (73) jusqu'à l'entrée (511) est plus courte qu'une distance depuis une extrémité supérieure du filtre (73) jusqu'à l'entrée (511).

5. Appareil de traitement de linge selon l'une quelconque des revendications 1 à 3, dans lequel une distance depuis une extrémité inférieure du filtre (73) jusqu'à l'entrée (511) est plus longue qu'une distance depuis une extrémité supérieure du filtre (73) jusqu'à l'entrée (511).

6. Appareil de traitement de linge selon l'une quelconque des revendications 1 à 3, dans lequel le filtre (73) est formé pour avoir une surface convexe dans une direction qui s'étend en s'écartant de l'entrée (511).

7. Appareil de traitement de linge selon la revendication 6, dans lequel l'entrée (511) est agencée sur un plan en contact avec une extrémité inférieure du filtre (73), et
dans lequel le châssis de filtre (71) inclut en outre un élément de guidage (713) qui guide de l'air introduit à partir de l'entrée (511) vers le filtre (73).

8. Appareil de traitement de linge selon l'une quelconque des revendications 1 à 7, incluant en outre un laveur d'échangeur de chaleur (9) configuré pour pulvériser de l'eau de lavage sur l'échangeur de chaleur (59).

9. Appareil de traitement de linge selon la revendication 8, dans lequel le laveur d'échangeur de chaleur (9) inclut :
un corps de passage (91) agencé dans une direction de largeur du passage de circulation (51), qui reçoit de l'eau de lavage dans celui-ci ; et
un ou plusieurs trous d'évacuation (95) qui évacuent l'eau de lavage à l'intérieur du corps de passage (91) jusqu'à l'échangeur de chaleur (59).

10. Appareil de traitement de linge selon l'une quelconque des revendications 1 à 9, dans lequel l'échangeur de chaleur (59) inclut :
au moins une première plaque d'échange de chaleur (591b) qui échange de la chaleur avec de l'air à l'intérieur du passage de circulation (51) ;
au moins un premier tuyau de fluide frigorigène (591a) fixé à la au moins une première plaque d'échange de chaleur (591b) ;
au moins une seconde plaque d'échange de chaleur (593b) agencée dans le passage de circulation (51), qui échange de la chaleur avec l'air qui est passé à travers la au moins une première plaque d'échange de chaleur (591b) ;
au moins un second tuyau de fluide frigorigène (593a) fixé à la au moins une première plaque d'échange de chaleur (591b) et à la au moins une seconde plaque d'échange de chaleur (593b) ;
un compresseur (595) qui fournit un fluide frigorigène évacué à partir du au moins un premier tuyau de fluide frigorigène (591a) jusqu'au au moins un second tuyau de fluide frigorigène (593a), d'une manière comprimée ; et
un dispositif d'expansion (597) qui met en mouvement le fluide frigorigène évacué à partir du au moins un second tuyau de fluide frigorigène (593a), jusqu'au au moins un premier tuyau de fluide frigorigène (591a), après la réduction d'une pression du fluide frigorigène.

11. Appareil de traitement de linge selon la revendication 10, dans lequel le passage de circulation (51) inclut :
un premier dispositif de montage (515) qui supporte l'échangeur de chaleur (59) ; et
un second dispositif de montage (517) qui supporte une extrémité inférieure du châssis de filtre (71), dans lequel le second dispositif de montage (517) est agencé à une position plus haute qu'une position du premier dispositif de montage (515).

12. Appareil de traitement de linge selon la revendication 11, dans lequel le passage de circulation (51, 53, 55) inclut en outre :
un dispositif de vidange (25) qui évacue l'eau à l'intérieur du dispositif de réception de linge (2, 3) ; et
un tuyau d'évacuation (541) qui relie le premier dispositif de montage (515) et le dispositif de vidange (25).
